# EUROPEAN PATENT SPECIFICATION

(11) **EP 1 727 377 B1**
(45) Date of publication and mention of the grant of the patent: **06.12.2006**
(21) Application number: 05291226.8
(22) Date of filing: 25.05.2005
(51) Int. Cl.: H04Q 3/00

(54) **Telecommunications services**
Telekommunikationsdienste
Services de télécommunications

(43) Date of publication of application: 29.11.2006
(73) Proprietor: ALCATEL, 75008 Paris (FR)
(72) Inventor: Spitzer, Uwe, 71522 Backnang (DE); Breiholz, Andreas, 71723 Grossbottwar (DE); Kneer, Josef, 71263 Weil der Stadt (DE); Gramsch, Dieter, 70825 Korntal (DE); Leibfarth, Roland, 72581 Dettingen (DE)
(74) Representative: Rausch, Gabriele

(56) References cited:
- WO-A-97/50232

## Description

The invention relates to a server arrangement, a service distribution module for a server arrangement and a method for providing telecommunications services using a server arrangement, in particular a Service Control Point, comprising the steps:
- receiving a service request message by a communication interface of the server arrangement,
- distributing the service request of the service request message to a first or to at least one second service provision means depending on the service request message,
- providing a first service by the first service provision means or providing at least one second service by the at least one second service provision means.

The server arrangement is for example a Service Control Point (SCP) of a telecommunications network, for example an Integrated Services Digital Network (ISDN) or a mobile network. An example can be found in WO 97/50232. A user dials a service number for a call at his terminal. Upon that call request, the network, in particular a Service Switching Function of the network, transmits a service request message to the Service Control Point. The Service Control Point provides the service that is requested by the service request message. The first service is for example a free phone service (0800-service) which is requested by service messages of a first type. If the terminal and/or the Service Switching Function requests a second service, for example a local number portability service, a calling card service or the like, it sends a second service request message. Both service request messages must be routed through the full protocol stack of the communications network. Furthermore, the service request message as such does quite often not contain all information that it necessary to provide the requested service. In such cases the Service Control Point or server arrangement sends further inquiry messages to the Service Switching Function in order to request the information needed to complete the service. These further messages cause much traffic in the telecommunications network.

It is therefore an object of the invention to provide for optimized service provision in a telecommunications network.

This object is attained by a server arrangement, in particular a Service Control Point, according to the teaching of claim 1, by a service distribution module for a server arrangement and a method for providing telecommunications services according to the teaching of further independent claims.

The idea underlining the invention is that the originating party, for example a Service Switching Function, that is requesting a service, needs not to send individual service request message for each service that is needed rather than only one service request message for a set of services which are linked at the server arrangement side, i.e. at a Service Control Point according to the invention. Therefore, only the traffic in connection with the first service request message has to be transmitted to the telecommunications network or the traffic which is costs by further inquiries of the Service Control Point in connection with this first service request message. The information thereby collected is preferably stored at the server arrangement. Thus, the server arrangement can use this information to provide both the first service and the at least one second service. It is not necessary, that the server arrangement starts a second dialog with the service requesting party in order to collect the same information as already collected in connection with the first service. Therefore, the service provision rate or speed is increased and the traffic through the telecommunications network is reduced. The first service and the at least one second service are preferably provided as a result of one originating service request message.

A main idea is to have some independent services which can be combined in a flexible way in dependence of one or more concatenation conditions, e.g. an incoming call and/or results of previous service or services and/or runtime configuration data. Preferably, the at least one concatenation condition is configurable at the server arrangement which means that further concatenation conditions may be added, conditions may be deleted or amended. Therefore, the concatenation of services according to the invention is dynamic.

The server arrangement provides the first service and the combined at least one second service so to say as one integrated service.

The service distribution means forwards service request messages to one or more services depending on its configuration data that may comprise for example: number of services and/or a list of services, e.g. names of shared libraries and/or number of instances per service and/or service logic tables containing concatenation conditions.

The service distribution means concatenates the first and the at least one second service in such a way that the first and the at least one second service are provided as a result of one originating service request message.

Further advantages of the invention are defined in the subclaims.

The invention will be come more apparent by reference to the following description of several embodiments taken in conjunction with the accompanying drawings in which:
- Fig. 1: is a functional diagram of a telecommunications network with a Service Control Point in accordance with the invention;
- Fig. 2: is a functional block diagram of the Service Control Point of Fig. 1, the Service Control Point being in dialog with a service requesting party, and
- Fig. 3: a functional block diagram of a Service Control Point in accordance with the invention.

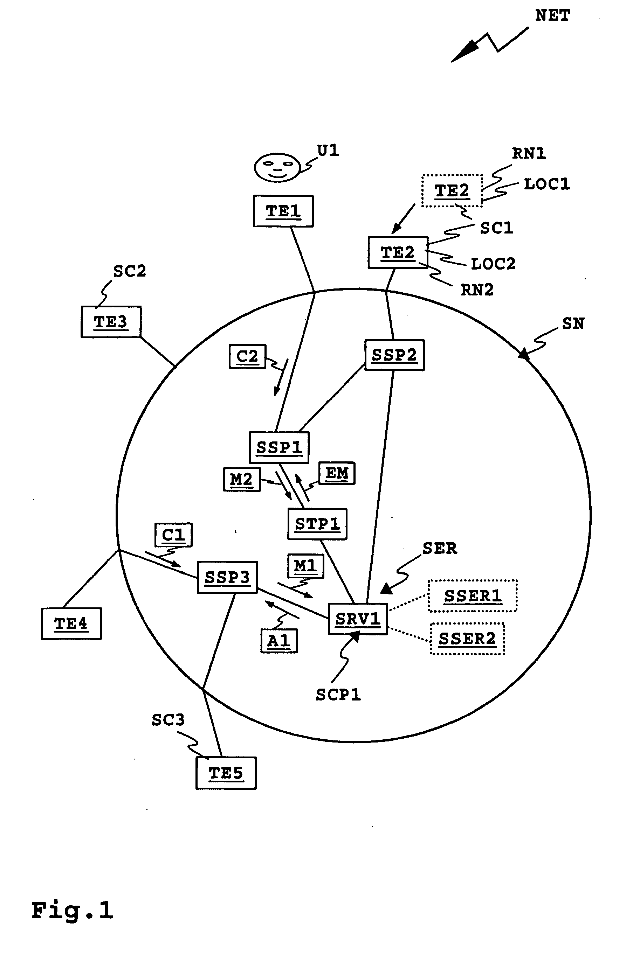

Fig. 1 shows a telecommunications network NET, that may comprises a fixed network or subnetwork, e.g. a Integrated Services Digital Network (ISDN) and/or a mobile network or subnetwork, for example a GSM network (= Global System for Mobile Communications). Besides voice communication, of course, video and data communication may be possible over the network NET.

The communications network may be at least partly a circuit-switched network and/or a packet oriented network. The network NET comprises a number of interconnected exchanges, for example exchanges SSP1, SSP2 and SSP3. The exchanges SSP1, SSP2 and SSP3 may be Service Switching Points and provide Service Switching Functions for terminals TE1-TES that are shown by way of example. The terminals TE1-TE5 may be mobile terminals, for example mobile phones, fixed terminals, computers or the like. The exchanges SSP1 - SSP3 are interconnected by a signaling network SN which may be based for example on the ITU-T signaling system No. 7. In the present case, the Signaling Network SN is based on base protocol BP, for example MTP or TCP/IP (MTP = Message Transfer Part; TCP/IP Transmission Control Protocol /Internet Protocol).

The network NET provides, inter alia, services in accordance with the definitions of an Intelligent Network, for example free phone services, universal number services, calling card services, local number portability services, wireless roaming, personal communications services (PCS) or the like.

In the event of emergency the universal number service is helpful. For example the terminal TE4 sends a call C1 to the exchange SSP3 requesting help in a car brake down. The exchange SSP3 detects that the call C1 is related to a telecommunications service and forwards a request message M1 to a Service Control Point SCP1 containing a server arrangement SER in accordance with the invention. The Service Control Point SCP1 detects for example based on the originating address or telephone number of the terminal TE4 which of the service centers SC2 or SC3 with terminals TE3, TE5 respectively is closer to the location of the terminal TE4. In the present case terminal TE5 is the closest one and consequently the Service Control Point SCP1 provides in a response message A1 the address i.e. the telephone number, of the terminal TE5. The exchange SSP3 completes based on this destination number or destination address the call from terminal TE4 to terminal TE5.

However, if a second service, for example number portability service or the like, is requested, the exchange or Service Switching Point SSP3 would be obliged to send a second service request message to the Service Control Point SCP1. This causes a lot of traffic within the communications network NET, extends the call set up time, needs a lot of resources like telecommunications links or connections. In this scenario the invention is very helpful:

Also user U1 needs assistance from a service center which is close to his present location. Therefore, he calls a universal number that is valid independent from the current location of user U1. Terminal TE1 send a call or call request C2 to the exchange SSP1. The exchange SSP1 generates accordingly a service request message M2 that is forwarded on the signaling network SN via a Service Transfer Point STP1 by way of example. The Service Transfer Point STP1 forwards the service request message M2 further to the Service Control Point SCP1. Of course, the request message M2 could also be forwarded in another embodiment of the invention directly from the Service Switching Point SSP1 via a direct link or connection DLI to the Service Control Point SCP1.

The Service Switching Point SSP2 contains a Service Switching Function SSF1 that represents a TCAP user TCU (TCAP = Transaction Capabilities Application Part). The service request message M2 is forwarded through the full protocol stack PS which contains in the present embodiment TCAP, SCCP and a base protocol BP which could be for example MTP or TCP/IP (SCCP = Signaling Connection Control Part). SCCP is used as a transport layer for the TCAP service request message M2. The base protocol BP is used as a transport layer for the SCCP messages.

Similar as the terminal TE1, the originating party of the service request message M2 also the receiving party, the server arrangement SER / the Service Control Point SCP1 represents a TCAP user.

The server arrangement SER may comprise one single server SVR1 or a computer cluster containing one or more processors PR for the execution of program code of program modules that are stored in a memory MEM containing volatile or non volatile memory, hard discs or the like.

In the present case the server arrangement SER has a layered structure with a communication layer CLY, a service distribution layer SDLY and a service layer SERLY. The communication layer CLY contains a communication interface CI with a protocol manager PMAN which comprises several program modules executable by the processor PR. The protocol manager PMAN handles for example the extraction of the service request message M2 from the protocols BP, SCCP and TCAP of the protocol stack PS.

Then, the protocol manager PMAN forwards the message M2 to the service distribution layer SDLY containing service distribution means SDM. The service distribution means SDM contain a service distributor SDI1 that receives the service request message M2 and distributes it to a service logic controller SLC1 that is also a part of the service distribution means SDM. Basically, the service distributor SDI1 could address a further service logic controller (not shown in the figure) if that service logic controller would be better suited to treat the service request message M2. If a service request message requests for example a calling card service the service distributor SDI1 would forward this service request to the second service logic controller, that is not shown in the figure. However, the service request message M2 concerns a universal number service and is therefore forwarded to the service logic controller SLC1.

In the present case, the service logic controller SLC1 and the service distributor SDI1 are separate program modules with program code executable by the processor PR. Instead of a structured architecture with two separate program modules, the service logic controller SLC1 and the service distributor SID1, one could provide one single program module performing the same functionality.

The service logic controller SLC1 can address services or service instances S11, S12, S13 - S1N of a service group SG1. The service instances S11-S1N and preferably also the database DB1 are service provision means SPM of the service layer SERLY.

The service instances S11 and S13 provide for example a universal number service of a first and a second type respectively. The service instance S13 comprises basically the same program code as the service instance Sl1 However, the service instances S11 and S13 are differently configured by configuration data or service data D11 and D13 respectively stored in a database DB1 being contained in the Service Control Point SCP1.

The database DB1 may in an alternative embodiment of the invention also at least partly a database remote from the Service Control Point SCP1, for example a number portability database contained in a remote server (not shown).

The service instance S12 provides a number portability service using number portability data or service date D12. Further services or service instances S1N may concern calling card services, wireless roaming services, personal communications services (PCS) or the like using service data D1N also stored in the database DB1.

As the service request message M2 is for example the BEGIN message BEG of a TCAP dialog DIA1 or a IAM message of a ISUP dialog (ISUP = ISDN User Part), the service logic controller SLC1 checks upon receipt of the service request message M2 whether there is already a call context available for the requested service. Search conditions for the detection of an already existing call context is data contained in the respective received service request message, for example an originating address ON and/or a destination address DN and/or a logical network identifier of a network NET and/or a unique message identifier, e.g. a transaction identifier TID, or the like. If there is no call context for the service request message M2, the service logic controller SLC1 generates a new call or message context CON1 in a call or message context memory CCM. The context CON1 contains data necessary to provide the service requested by the message M2, e.g. the transaction id TID, the originating address or number ON of the terminal TE1 and further data as described below.

The service distributor SDI1 and/or the service logic controller SLC1 detect that the service request of the service request message M2 does not contain the complete information needed to provide the requested service.

The service request message M2 contains e.g. only a request for the universal number service, i.e. the request for a service, which could be provided,by one of the service centers SC1-SC3, and the originating address or number ON of the terminal TE1. However, this information is not sufficient to perform the requested service.

Therefore, the service distributor SDI or the service logic controller SLC1 sends an inquiry message EM, e.g. a TCAP query message, to the originating party or TCAP user TCU. With a message EM the Service Control Point SCP1 requests for example the destination number or address DN of the requested service. The TCAP user TCU responds with a message M3, e.g. a so-called CONTINUE message CON, e.g. a TCAP response message, in which the requested destination address or number DN is contained.

The service logic controller SLC1 determines by means of transaction id TID that was already contained in message M2 that the new message M3 belongs to the dialog DIA1. The service logic controller SLC1 stores in the call context CON1 preferably only the essential information of the dialog DIA1, e.g. at least the originating address ON, the destination address DN and the transaction identifier TID. However, also the complete dialog DIA1 may be stored in the call context CON1. Furthermore, the call context CON1 contains preferably a reference REF1 to a service logic table SLT1, a reference to a current entry EN1 in the table SLT1. The call context CON1 may comprise further data, for example an originating server address if the call context CON1 has been received from a server remote from the Service Control Point SCCP1 and/or a forward indicator or address of another service server according to the invention, if the call context CON1 has been forwarded to this other server. The call context CON1 can also comprise further data, for example a last incoming message in connection with a service provision, e.g. message M2, or an indicator to that message and/or a message that has to be sent next in connection with the service provision.

In the above first scenario the service logic controller SLC1 collects all necessary information prior addressing the service instance S11. However, a preferred embodiment of the invention the service logic controller SLC1 and the service instance S11 are already in dialog while collecting the necessary information:

The service logic controller SLC1 determines by means of a service logic table SLT1 that the service request message M2 concerns a universal number service. The service logic table SLT1 is linked with the context memory CON1. The service request message M2 contained for example a service request identifier UN for universal number services. According to an entry EN1 a service identifier SID1 is assigned to the service request identifier UN. The service identifier SID1 indicates that the service instance S11 is able to perform the universal number service. Thus, the service logic controller SLC1 addresses the service instance S11. The service instance S11 determines that still information is necessary to perform the service and returns for example the return value R11 indicating that further information, in the present case the destination number DN, is still needed to provide the full service. Thus, the service logic controller SLC1 sends the inquiry message EM requesting the destination number DN.

If also the destination number DN is available the service logic controller SLC1 follows the links of the entry EN1 and addresses the service instance S11 again with this new collected data. The service instance S11 is now able to perform the complete universal number service upon receipt of the first service call of the service logic controller SLC1. The service instance S11 sends the return value R1x comprising all information necessary for the completion of the universal number service. The Service Control Point SCP1 could now basically instruct the Service Switching Points SSP1, SSP2 to complete the call request C2 and to connect terminal TE1 to terminal TE2. The terminal TE2 belongs to a service center SC1 which is closer than the service center SC2 to the user U1.

However, the service center SC1 has moved from a former location LOC1 with a destination address RN1 to a new location LOC2 with a new destination address or destination number RN2. In a conventional Intelligent Network architecture the Service Switching Points SSP1 and/or SSP2 would have to perform a number portability service as a second service which means that the full dialog DIA1 over the protocol stack PS would have to be repeated. According to the invention this is not necessary:

The entry EN1 of the service logic table SLT1 contains an assignment of the return value R1x to a service identifier SID2 that belongs to the service instance S12 which performs a number portability service. Accordingly, the service logic controller SLC1 addresses the service instance S12 which determines by means of the service data D12, for example a number portability database, the destination number RN2 of the terminal TE2.

The service instance SN2 returns the destination number RN2 in connection with a return value R12. The return value R12 is assigned to an end indicator END. Consequently, no further service is concatenated according to the service logic table SLT1. The full service package consisting of universal number service and concatenated number portability service is completed and the Service Control Point SCP1 completes in cooperation with the Service Switching Points SSP1, SSP2 the call request C2 from terminal TE1 to terminal TE2 with its new destination number RN2.

The link from the return value R11 to service identifier SID2 is a concatenation condition according to the invention. It has to be noted, that further services may be concatenated, for example the services S13 - S1N or the like. Furthermore other concatenation conditions are possible, for example a runtime configuration data, an incoming call or information of an incoming call or the like. Also, the service instances S11, S12, S13 - S1N may be addressed as individual, non-concatenated services.

The Service Control Point SCP1 is thus able to perform also conventional services that are not concatenated. For example the entry EN2 of the service logic table SLT1 concerns such kind of services. If for example a service request identifier B2 is addressed by a request message M4, this identifier B2 is assigned to a service identifier SID3 of the service instance S13. The return value R13 of the service instance R13 is linked with an END-indicator which means that the service is already completed. Upon receipt of the service request message M4 the service logic controller SLC1 generates a new call context CON2.

The entries EN1, EN2 could be parts of two different service logic tables.

The service logic table SLT1 is preferably configurable, for example by a user interface, preferably by a graphical user interface.

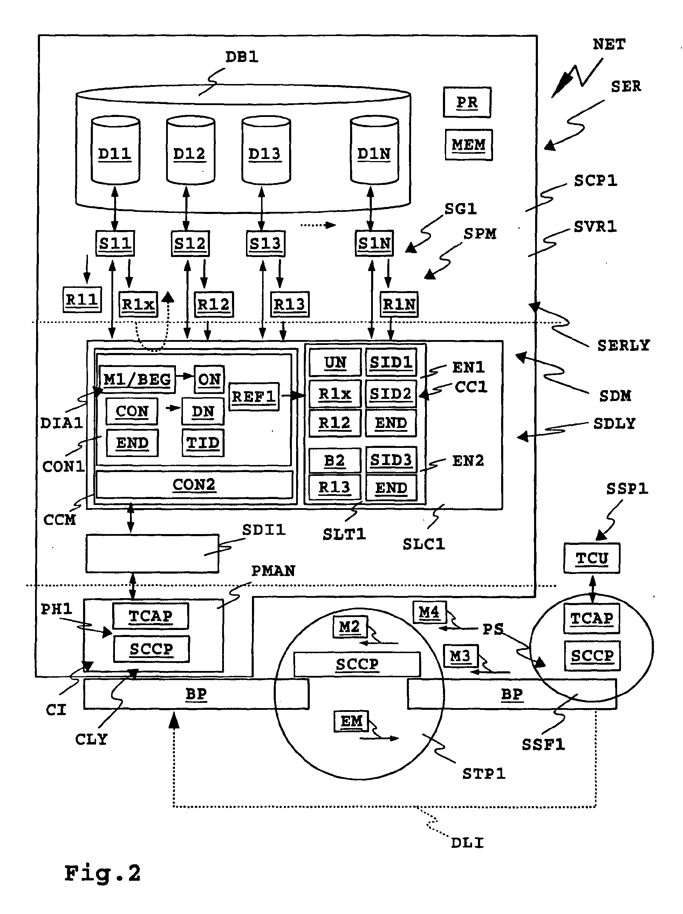

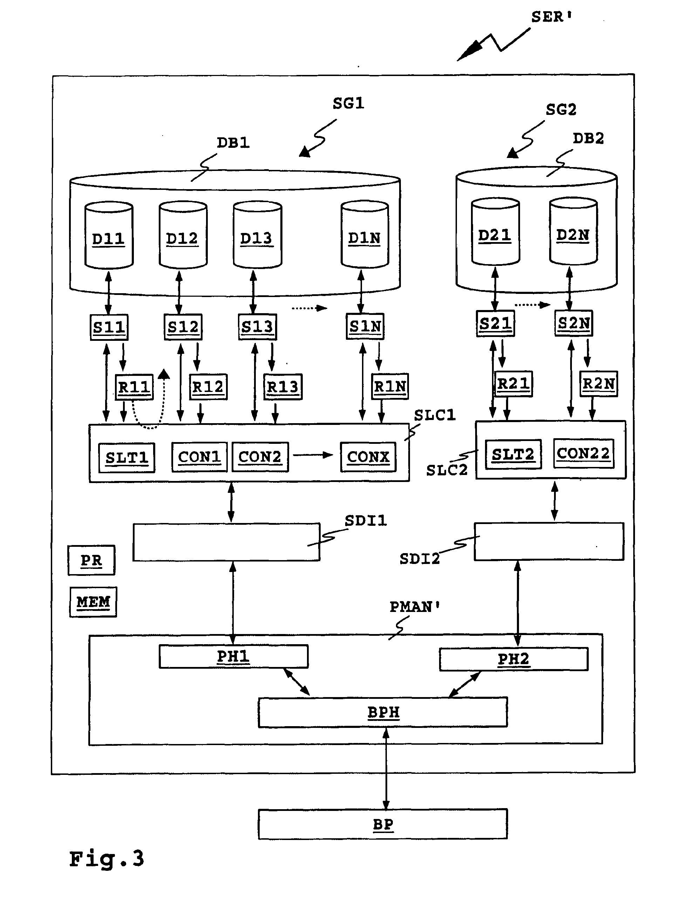

A server arrangement SER' shown in Fig. 3 is slightly different from the server arrangement SER according to Figs. 1, 2. As far as both server arrangements SER, SER' comprise the same components or functionality the same denominators are used.

The server arrangement SER1 perform beside the TCAP services as described above services related to at least one further protocol. For example, service instances S21 - S2N of a second service group SG2 belong to SCCP relay services and/or ISUP services. A protocol handler PH1 of a protocol manager PMAN' is related to the TCAP-SCCP services as described above. A second protocol handler PH2 is for example handling SCCP messages. Furthermore, the protocol handler PH2 could comprise a MTP3 transcoder and/or an ISUP transcoder related to ISUP services. Of course, the protocol manager PMAN may comprise further protocol engines for other protocols. A base protocol handler BPH is handling a base protocol or transport protocol for the transport of the SCCP or ISUP messages as described above. In connection with the server arrangement SER' the base protocol BP is for example a TCP/IP.

The ISUP services or SCCP relay services are handled by a service distributor as DI2 and a service logic controller SLC2 working similar as the service distributor SDI1 and the service logic controller SLC1. The service logic controller SLC2 comprises a service logic table SLT2 and a context memory CON22. The service instances S21 - S2N use a database DB2 containing service data SD1 containing service data D21 - D2N assigned to the service instances S21 - S2N. The service instances S2N - S2N generate return values or codes R21 - R2N, which could be evaluated by the service logic controller SLC2 in order to concatenate or link the service instances S21 - S2N as described above.

With reference to Figure 1 a distributed service provision architecture according to the invention is shown. The services of the service instances S11, S12 could performed by service subservers SSER1, SSER2 that are separate from the Server SRV1 of the Service Control Point SCP1. The Server SRV1 could for example instead of addressing the service instances S11 and S12 use the subservers SSER1, SSER2 performing the same services. The Server SRV1 forwards preferably the call context CON1 first to the service subserver SSER1 in order to complete the universal number service and subsequently, according to the service logic table SLT1 and the service identifier SID2, to the service subserver SSER2. The Server arrangement SER is designed such that it forwards the respective request message context to a first service server SSER1 providing the first service or to at least one second service server providing at least one second service.

If the full service package of the service instances S11, S12 is completed, locally by the Server SRV1 and/or remotely by the subservers SSER1, SSER2, the call context CON1 is released.

The service logic controller SLC may comprise further data, for example the number of services S11 - S1N that may be performed, a list of services, that may be provided, for example names of shared libraries, the number of instances per service, a number of a.service logic tables and further service logic tables defining the concatenation of service instances as described above.

The service distribution means or module SDM may be stored on a storage means for example a hard disc, an optical disc like a DVD or the like.

## Claims

1. Server arrangement, in particular a Service Control Point (SCP1), for providing telecommunications services, the server arrangement (SER, SER') comprising:
- a communication interface (CI) for receiving service request messages (M1-M3),
- a first service provision means (S11) providing a first service,
- at least one second service provision means (S12) providing at least one second service,
- a service distribution means (SDM) for distributing the service request of the service request message (M1-M3) to the first (S11) or the at least one second service provision means (S12) depending on the service requested by the respective service request message (M1-M3),
**characterised in**
- **that** the service distribution means (SDM) is designed in such a way that it concatenates the first (S11) and the at least one second service provision means (S12) depending on at least one concatenation condition (CC1), the at least one concatenation condition (CC1) comprising configurable configuration data for linking services whereby concatenation conditions can be added or deleted or amended.

2. Server arrangement in accordance with claim 1 wherein the service distribution means (SDM) activates the at least one second service provision means (S12) subsequent to the first service provision means (S11).

3. Server arrangement in accordance with claim 1 wherein the at least one condition comprises a result, in particular a return value (R1x), of the first service provision means (S11) and/or a call context of service request message (M1-M3).

4. Server arrangement in accordance with claim 1 having a layered structure wherein the service distribution means (SDM) is part of a service distribution layer (SDLY) between a service layer (SERLY) comprising the first service provision means (S11) and the at least one second service provision means (S12) and a communication layer (CLY) comprising the communication interface (CI).

5. Server arrangement in accordance with claim 1 comprising a service concatenation table (SLT1, SLT2) in which the at least one concatenation condition (CC1) is stored.

6. Server arrangement in accordance with claim 1 wherein the service distribution means (SDM) comprises a service request message context memory (CCM) in which the service distribution means (SDM) stores a context (CON1, CON2) of the respective service request message (M1-M3), the context (CON1, CON2) comprising a unique identifier (TID) of the service request message (M1-M3) and/or an originating address (ON) of the service request message (M1-M3) and/or a destination address (DN) contained in the service request message (M1-M3) and/or network identifier of an originating network or subnetwork of the service request message (M1-M3).

7. Server arrangement in accordance with claim 1 wherein the service request message context memory (CCM) is linked with the concatenation table (SLT1, SLT2) or is a part of the concatenation table (SLT1, SLT2).

8. Server arrangement in accordance with claim 1 wherein it comprises a first service server providing the first service (SSER1) and at least one second service server (SSER2) providing the at least one second service.

9. Service distribution module for a server arrangement, in particular a Service Control Point (SCP1), for providing telecommunications services, the server arrangement having a communication interface (CI) for receiving service request messages (M1-M3), the server arrangement having further a first service provision means (S11) providing a first service and at least one second service provision means (S12) providing at least one second service,
- the service distribution module comprising program code executable by a processor of the server arrangement
- the service distribution module comprising distribution means for distributing the service request of the respective service request message (M1-M3) to the first (S11) or the at least one second service provision means (S12) depending on the service requested by the respective service request message (M1-M3), and
- the service distribution means (SDM) being designed in such a way that it concatenates the first (S11) and the at least one second service provision means (S12) depending on at least one concatenation condition (CC1), the at least one concatenation condition (CC1) comprising configurable configuration data for linking services whereby concatenation conditions can be added or deleted or amended.

10. Method for providing telecommunications services using a server arrangement, in particular a Service Control Point (SCP1), comprising the steps of:
- receiving a service request message (Ml-M3) by a communication interface (CI) of the server arrangement,
- distributing the service request of the service request message (M1-M3) to a first or to at least one second service provision means (S12) depending on the service request message (M1-M3),
- providing a first service by the first service provision means (S11) or providing at least one second service by the at least one second service provision means (S12),
**characterised in**
- **that** the service distribution means (SDM) concatenates the first (S11) and the at least one second service provision means (S12) depending on at least one concatenation condition (CC1), the at least one concatenation condition (CC1) comprising configurable configuration data for linking services whereby concatenation conditions can be added or deleted or amended.

## Patentansprüche

1. Server-Anordnung, insbesondere ein Dienststeuerungspunkt (SCP1), zur Bereitstellung von Telekommunikationsdiensten, wobei die Server-Anordnung (SER, SER') folgendes umfasst:
- eine Kommunikationsschnittstelle (CI) zum Empfangen von Dienstanforderungsnachrichten (M1-M3),
- eine erste Dienstbereitstellungseinrichtung (S11), die einen ersten Dienst bereitstellt,
- mindestens eine zweite Dienstbereitstellungseinrichtung (S12), die mindestens einen zweiten Dienst bereitstellt,
- eine Dienstverteilungseinrichtung (SDM)zur Verteilung der Dienstanforderungen aus den Dienstanforderungsnachrichten (M1-M3) an die erste (S11) oder mindestens eine zweite Dienstbereitstellungseinrichtung (S12) abhängig von dem Dienst, der von der entsprechenden Dienstanforderungsnachricht (M1-M3) angefordert wurde,
**dadurch gekennzeichnet,**
- **dass** die Dienstverteilungseinrichtung (SDM) so konzipiert ist, dass sie die erste (S11) und die mindestens zweite Dienstbereitstellungseinrichtung (S12) verkettet, abhängig von der mindestens einen Verkettungsbedingung (CC1), der mindestens einen Verkettungsbedingung (CC1) mit konfigurierbaren Konfigurationsdaten zur Verknüpfung von Diensten, wobei Verkettungsbedingungen hinzugefügt oder gelöscht oder ergänzt werden können.

2. Server-Anordnung gemäß Anspruch 1, wobei die Dienstverteilungseinrichtung (SDM) mindestens die zweite Dienstbereitstellungseinrichtung (S12) im Anschluss an die erste Dienstbereitstellungseinrichtung (S11) aktiviert.

3. Server-Anordnung gemäß Anspruch 1, wobei die mindestens eine Bedingung ein Ergebnis umfasst, insbesondere einen Rückgabewert (R1x) der ersten Dienstbereitstellungseinrichtung (S11) und/oder einen Anrufkontext einer Dienstanforderungsnachricht (M1-M3).

4. Server-Anordnung gemäß Anspruch 1 mit einer Schichtstruktur, wobei die Dienstbereitstellungseinrichtung (SDM) Teil einer Dienstverteilungsschicht (SDLY) zwischen einer Dienstschicht (SERLY) aus der ersten Dienstbereitstellungseinrichtung (S11) und mindestens einer zweiten Dienstbereitstellungseinrichtung (S12) und einer Kommunikationsschicht (CLY) mit der Kommunikationsschnittstelle (CI) ist.

5. Server-Anordnung gemäß Anspruch 1 aus einer Dienstverkettungstabelle (SLT1, SLT2), in der mindestens eine verkettungsbedingung (CC1) gespeichert ist.

6. Server-Anordnung gemäß Anspruch 1, wobei die Dienstverteilungseinrichtung (SDM) einen Dienstanforderungsnachrichten-Kontextspeicher (CCM) enthält, in dem die Dienstverteilungseinrichtung (SDM) einen Kontext (CON1, CON2) der entsprechenden Dienstanforderungsnachricht (M1-M3), den Kontext (CON1, CON2) mit der eindeutigen Kennung (TID) der Dienstanforderungsnachricht (M1-M3) und/oder eine rufende Adresse der Dienstanforderungsnachricht (M1-M3) und/oder eine in der Dienstanforderungsnachricht (M1-M3) enthaltene Zieladresse (DN) und/oder eine Netzkennung eines rufenden Netzes oder Teilnetzes der Dienstanforderungsnachricht (M1M3) speichert.

7. Server-Anordnung gemäß Anspruch 1, wobei der Dienstanforderungsnachrichten-Kontextspeicher (CCM) mit der Verkettungstabelle (SLT1, SLT2) verknüpft ist oder einen Teil der Verkettungstabelle (SLT1, SLT2) darstellt.

8. Server-Anordnung gemäß Anspruch 1, wobei sie einen ersten Dienst-Server umfasst, der den ersten Dienst (SSER1) bereitstellt, und mindestens einen zweiten Dienst-Server (SSER2), der mindestens einen zweiten Dienst bereitstellt.

9. Dienstverteilungsmodul für eine Server-Anordnung, insbesondere ein Dienststeuerungspunkt (SCP1) zur Bereitstellung von Telekommunikationsdiensten, wobei die Server-Anordnung eine Kommunikationsschnittstelle (CI) zum Empfangen von Dienstanforderungsnachrichten (M1-M3) hat und die Server-Anordnung weiterhin eine erste Dienstbereitstellungseinrichtung (S11) hat, die einen ersten Dienst bereitstellt, und mindestens eine zweite Dienstbereitstellungseinrichtung (S12), die mindestens einen zweiten Dienst bereitstellt, wobei
- das Dienstverteilungsmodul Programmcode umfasst, der von einem Prozessor der Server-Anordnung ausgeführt werden kann,
- das Dienstverteilungsmodul die Dienstverteilungseinrichtung umfasst zur Verteilung der Dienstanforderung der entsprechenden Dienstanforderungsnachricht (M1-M3) an die erste (S11) oder die mindestens zweite Dienstbereitstellungseinrichtung (S12), abhängig von dem über die jeweilige Dienstanforderungsnachricht (M1-M3) angeforderten Dienst, und
- die Dienstverteilungseinrichtung (SDM) so konzipiert ist, dass sie die erste (S11) und die mindestens zweite Dienstbereitstellungseinrichtung (S12) verkettet, abhängig von mindestens einer Verkettungsbedingung (CC1) und wobei die mindestens eine Verkettungsbedingung (CC1) konfigurierbare Konfigurationsdaten umfasst zum Verknüpfen von Diensten, wobei Verkettungsbedingungen hinzugefügt oder gelöscht oder ergänzt werden können.

10. Verfahren zur Bereitstellung von Telekommunikationsdiensten mithilfe einer Server-Anordnung, insbesondere eines Dienststeuerungspunktes (SCP1), wobei dieses Verfahren die folgenden Schritte umfasst:
- Empfangen einer Dienstanforderungsnachricht (M1-M3) über eine Kommunikationsschnittstelle (CI) der Server-Anordnung,
- Verteilung der Dienstanforderung aus der Dienstanforderungsnachricht (M1-M3) an eine erste oder eine mindestens zweite Dienstbereitstellungseinrichtung (S12), abhängig von der Dienstanforderungsnachricht (M1-M3),
- Bereitstellung eines ersten Dienstes durch die erste Dienstbereitstellungseinrichtung (S11) oder Bereitstellung eines mindestens zweiten Dienstes durch die mindestens zweite Dienstbereitstellungseinrichtung (S12),
**dadurch gekennzeichnet,**
- **dass** die erste Dienstverteilungseinrichtung (SDM) die erste (S11) und die mindestens zweite Dienstbereitstellungseinrichtung (S12) verkettet, abhängig von der letzten Verkettungsbedingung (CC1), die mindestens eine Verkettungsbedingung (CC1) mit konfigurierbaren Konfigurationsdaten für die Verknüpfung von Diensten umfasst und Verkettungsbedingungen hinzugefügt oder gelöscht oder ergänzt werden können.

## Revendications

1. Agencement de serveur, en particulier un point de commande de services (SCP1), pour fournir des services de télécommunications, l'agencement de serveur (SER, SER') comprenant :
- une interface de communication (CI) pour recevoir des messages de demande de service (M1-M3),
- un premier moyen de fourniture de services (S11) fournissant un premier service,
- au moins un second moyen de fourniture de services (S12) fournissant au moins un second service,
- un moyen de distribution de services (SDM) pour distribuer la demande de service du message de demande de service (M1-M3) au premier (Sl1) ou au au moins un second moyen de fourniture de services (S12) en fonction du service demandé par le message de demande de service respectif (M1-M3),
**caractérisé en**
- **ce que** le moyen de distribution de services (SDM) est conçu de telle façon qu'il concatène le premier (S11) et le au moins un second moyen de fourniture de services (S12) en fonction d'au moins une condition de concaténation (CC1), la au moins une condition de concaténation (CC1) comprenant des données de configuration configurables pour relier les services de sorte que des conditions de concaténation puissent être ajoutées ou supprimées ou modifiées.

2. Agencement de serveur selon la revendication 1, dans lequel le moyen de distribution de services (SDM) active le au moins un second moyen de fourniture de services (S12) après le premier moyen de fourniture de services (S11).

3. Agencement de serveur selon la revendication 1, dans lequel la au moins une condition comprend un résultat, en particulier une valeur de retour (R1x), du premier moyen de fourniture de services (S11) et/ou un contexte d'appel de message de demande de service (M1-M3).

4. Agencement de serveur selon la revendication 1 ayant une structure en couches, dans lequel le moyen de distribution de services (SDM) fait partie d'une couche de distribution de services (SDLY) entre une couche de services (SERLY) comprenant le premier moyen de fourniture de services (S11) et le au moins un second moyen de fourniture de services (S12) et une couche de communication (CLY) comprenant l'interface de communication (CI).

5. Agencement de serveur selon la revendication 1, comprenant une table de concaténation de services (SLT1, SLT2) dans laquelle la au moins une condition de concaténation (CC1) est stockée.

6. Agencement de serveur selon la revendication 1, dans lequel le moyen de distribution de services (SDM) comprend une mémoire de contexte de message de demande de service (CCM) dans laquelle le moyen de distribution de services (SDM) stocke un contexte (CON1, CON2) du message de demande de service respectif (M1-M3), le contexte (CON1, CON2) comprenant un identificateur unique (TID) du message de demande de service (M1-M3) et/ou une adresse d'origine (ON) du message de demande de service (M1-M3) et/ou une adresse de destination (DN) contenue dans le message de demande de service (M1-M3) et/ou un identificateur de réseau d'un réseau ou sous-réseau d'origine du message de demande de service (M1-M3).

7. Agencement de serveur selon la revendication 1, dans lequel la mémoire de contexte de message de demande de service (CCM) est liée avec la table de concaténation (SLT1, SLT2) ou est une partie de la table de concaténation (SLT1, SLT2).

8. Agencement de serveur selon la revendication 1, dans lequel il comprend un premier serveur de services fournissant le premier service (SSER1) et au moins un second serveur de services (SSER2) fournissant le au moins un second service.

9. Module de distribution de services pour un agencement de serveur, en particulier un point de commande de services (SCP1), pour fournir des services de télécommunications, l'agencement de serveur ayant une interface de communication (CI) pour recevoir des messages de demande de service (M1-M3), l'agencement de serveur ayant en outre un premier moyen de fourniture de services (S11) fournissant un premier service et au moins un second moyen de fourniture de services (S12) fournissant au moins un second service,
- le module de distribution de services comprenant un code de programme exécutable par un processeur de l'agencement de serveur,
- le module de distribution de services comprenant un moyen de distribution pour distribuer la demande de service du message de demande de service respectif (M1-M3) au premier (S11) ou au au moins un second moyen de fourniture de services (S12) en fonction du service demandé par le message de demande de service respectif (M1-M3), et
- le moyen de distribution de services (SDM) étant conçu de telle façon qu'il concatène le premier (S11) et le au moins un second moyen de fourniture de services (S12) en fonction d'au moins une condition de concaténation (CC1), la au moins une condition de concaténation (CC1) comprenant des données de configuration configurables pour relier les services de sorte que des conditions de concaténation puissent être ajoutées ou supprimées ou modifiées.

10. Procédé pour fournir des services de télécommunications en utilisant un agencement de serveur, en particulier un point de commande de services (SCP1), comprenant les étapes consistant à :
- recevoir un message de demande de service (MI-M3) par une interface de communication (CI) de l'agencement de serveur,
- distribuer la demande de service du message de demande de service (M1-M3) à un premier ou à au moins un second moyen de fourniture de services (S12) en fonction du message de demande de service (M1-M3),
- fournir un premier service par le premier moyen de fourniture de services (S11) ou fournir au moins un second service par le au moins un second moyen de fourniture de services (S12),
**caractérisé en**
- **ce que** le moyen de distribution de services (SDM) concatène le premier (S11) et le au moins un second moyen de fourniture de services (S12) en fonction d'au moins une condition de concaténation (CC1), la au moins une condition de concaténation (CC1) comprenant des données de configuration configurables pour relier les services de sorte que des conditions de concaténation puissent être ajoutées ou supprimées ou modifiées.
